# EUROPEAN PATENT SPECIFICATION

(11) **EP 2 189 692 B1**
(45) Date of publication and mention of the grant of the patent: **04.03.2015**
(21) Application number: 09176653.5
(22) Date of filing: 20.11.2009
(51) Int. Cl.: F16K 5/04, F16K 31/53

(54) **Dispensing valve**
Abgabeventil
Soupape de distribution

(30) Priority: 21.11.2008 US 275504
(43) Date of publication of application: 26.05.2010
(73) Proprietor: Symyx Solutions, Inc., Sunnyvale CA 94085 (US)
(72) Inventor: Valella, Antonio, 1218 Le Grand-Saconnex (CH); Pluvinage, Loic, 74100 Ville-la-Grand (FR); Courtin, Pascal, 74140 Veigy-Foncenex (FR)
(74) Representative: Eisenführ Speiser

(56) References cited:
- EP-A2- 0 335 090
- EP-A2- 2 103 852
- WO-A1-2006/046113
- WO-A1-2006/055977
- WO-A1-2008/067603
- WO-A2-02/37001
- CA-A- 869 886
- DE-U- 7 123 560
- GB-A- 1 260 797
- GB-A- 2 414 060
- JP-A- 61 052 469
- US-A- 1 339 412
- US-A- 1 844 046
- US-A- 3 554 218
- US-A- 3 762 682
- US-A- 3 985 152
- US-A- 4 483 366
- US-A- 4 614 203
- US-A- 4 846 223
- US-A- 5 046 523

## Description

### FIELD OF THE INVENTION

The present invention generally relates to dispensing apparatus, and more particularly to a valve for dispensing small quantities of solid material in powder or granular form.

### BACKGROUND OF THE INVENTION

In various industries, such as the chemical and the pharmaceutical industry, the handling of non-liquid materials in particulate form (e.g., powder or granules) is used for preparing mixtures, drugs, tests, in-process products or final products. Several dispensers for handling powdery materials are known in the prior art, and it is inherent to those devices that in general they are not suitable to precisely dispense different amounts of material, especially when the amount of material to be dispensed is small (e.g., in the range of milligrams). Further, these devices are not suitable to dispense powdery materials if the starting amount is very limited, such as for example 30 mg or less. However, in the chemical and the pharmaceutical industry, for research, development and production, it is important to be able to precisely dose small and very small amounts of powders and solids, with different flow characteristics and independent of the starting amount.

Prior art generally relevant to the present invention is described in International Publication No. WO 2007/054135, published May 18, 2007, owned by Symyx Technologies, Inc. Further relevant prior art is described in the documents EP0335090, JP61052469, US1844046 and WO2006046113.

### SUMMARY OF THE INVENTION

This invention is directed to a valve for dispensing small quantities of solid material in powder or granular form. The valve comprises all of the features of claim 1.

Other objects and features will be in part apparent and in part pointed out hereinafter.

### BRIEF DESCRIPTION OF THE DRAWINGS

Fig. 1 is a schematic view showing one embodiment of a valve of this invention attached to a source vessel containing a particulate solid material to be dispensed;
Fig. 2 is a perspective of the valve of Fig. 1;
Fig. 3 is an exploded perspective of the valve showing a valve member removed from a valve housing, and a retainer for retaining the valve member in the housing;
Fig. 4 is an enlarged section taken along lines 4--4 of Fig. 3 showing a valve body of the valve member;
Fig. 5 is an enlarged section taken along lines 5--5 of Fig. 3 showing the valve housing;
Fig. 6 is a vertical section through the valve taken in a plane generally perpendicular to the axis of rotation of the valve member, the valve member being shown in an open position;
Fig. 7 is a view similar to Fig. 6 but showing the valve member in a closed position;
Fig. 8 is vertical section through the valve taken in a plane generally parallel to the axis of rotation of the valve member, the valve member being shown in an open position;
Fig. 9 is a view similar to Fig. 8 but showing the valve member in a closed position;
Fig. 10 is a side elevation of the valve member;
Fig. 11 is a view similar to Fig. 10 but showing the valve member rotated 90 degrees; and
Figs. 12-14 are sectional views illustrating stops on the valve member engageable with the valve housing for stopping rotation of the valve member at locations corresponding to open (Fig. 12) and closed (Fig. 14) positions of the valve member.

Corresponding reference characters indicate corresponding parts throughout the drawings.

### DESCRIPTION OF THE PREFERRED EMBODIMENTS

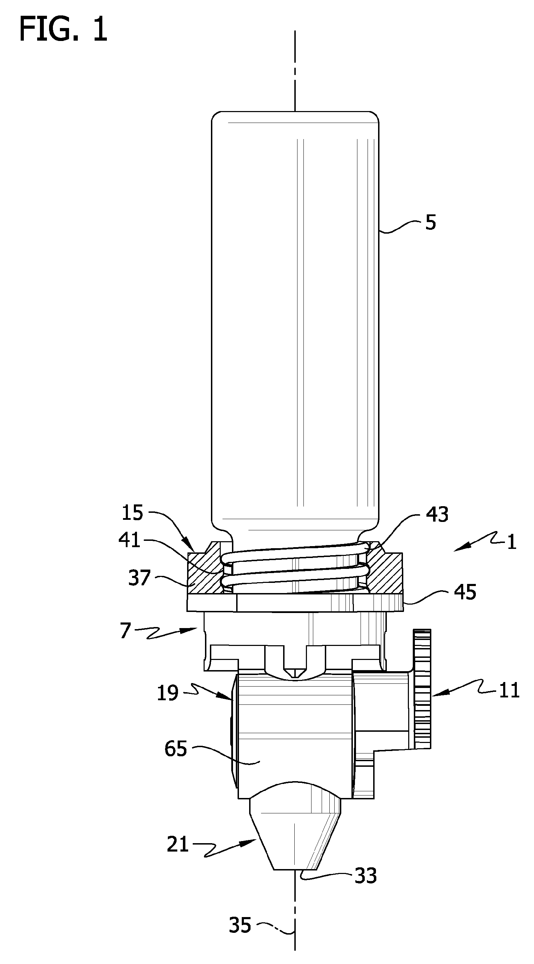

Referring now to Figs. 1-3 of the drawings, a dispensing valve in accordance with one embodiment of this invention is designated in its entirety by the reference number 1. The valve 1 is adapted for dispensing small but accurate quantities of solid material in particulate form (e.g., powder or granules) from a source vessel 5. By way of example but not limitation, the valve 1 is especially suited for dispensing quantities less than about 50mg, even more desirably less than about 30mg, even more desirably less than about 10mg, and even more desirably in the range of about 0.1 to 3mg. In general, the valve 1 comprises a valve housing 7 and a valve member 11 mounted in the valve housing for rotation between an open position for dispensing a metered quantity of material from the source vessel and a closed position. The material is dispensed into a suitable destination vessel. The components of the valve are described in more detail below.

Referring to Figs. 1, 3, 5 and 6, the valve housing 7 comprises an upper inlet section 15, a middle valve section 19 and a lower outlet section 21 which combine to define a generally vertical flow passage 25 through the housing for flow of powder from an inlet 31 at the upper end of the housing to an outlet 33 at the lower end of the housing. In this particular embodiment, the flow passage 25 is generally co-axial with the longitudinal central vertical axis 35 of the valve housing. Other configurations are contemplated.

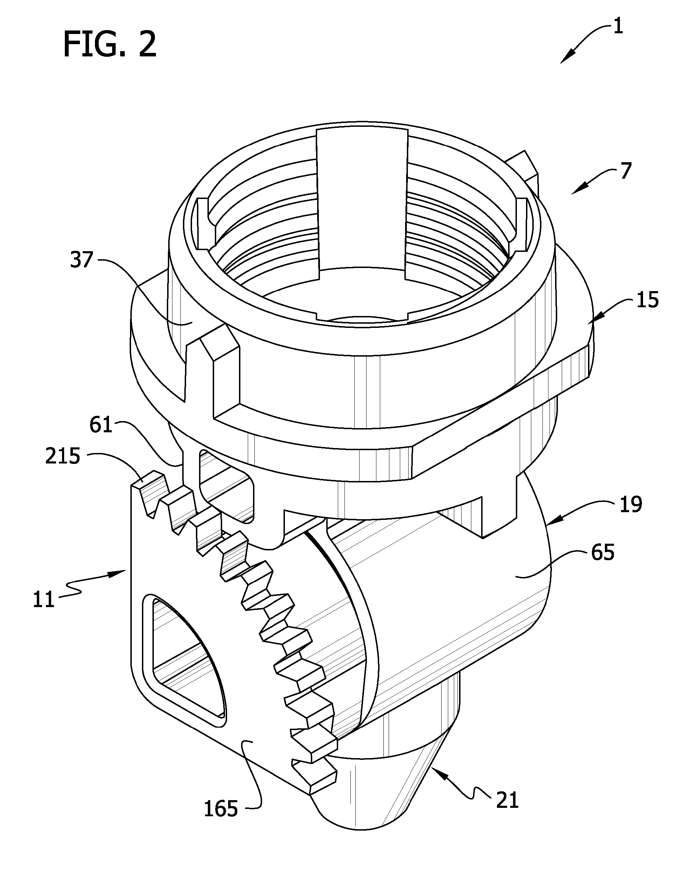

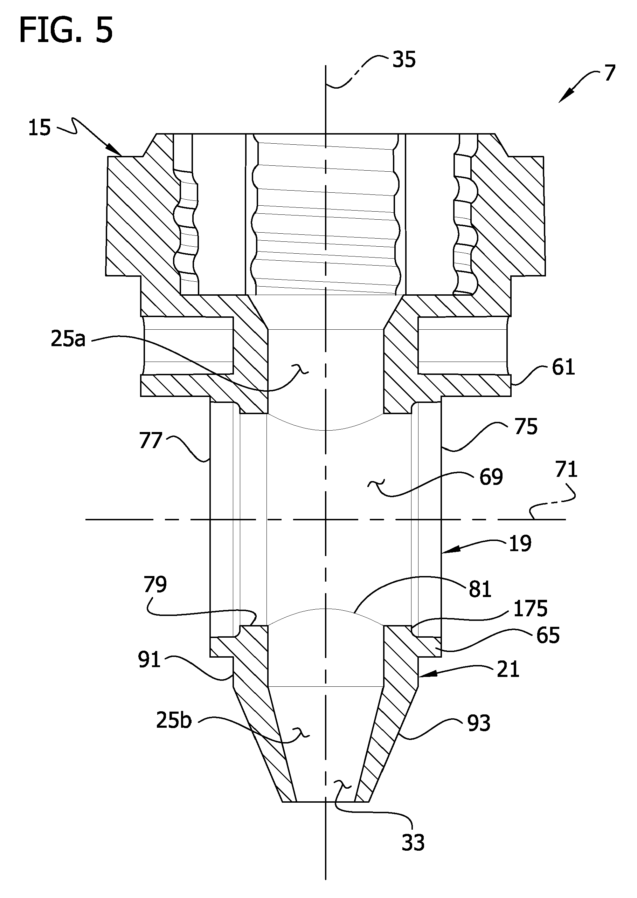

The upper inlet section 15 of the valve housing 7 surrounds an upper segment 25a of the vertical flow passage 25 and includes an upwardly opening cylindrical wall 37 having internal threads 41 which engage external threads 43 on the source vessel 5 containing material to be dispensed. The valve housing 7 may be connected to the source vessel 5 in other ways. A circumferential flange 45 projects horizontally outward from the wall 37 and includes wrench flats 47 for turning the valve housing 7 on its vertical axis to make the connection with the stated source of powder. The upper inlet section 15 also includes a generally horizontal internal shoulder 51 (see Fig. 5) for supporting a seal or otherwise sealing the connection. The flow passage tapers downward from the shoulder a short distance, as indicated at 55. A lower horizontal beam structure 61 (Fig. 2) extends below the cylindrical wall 37 for reasons that will become apparent later.

The middle valve section 19 of the valve housing 7 comprises a generally part-cylindrical wall or sleeve 65 which defines a valve opening 69 extending completely through the housing from one side of the housing to the other side of the housing (see Fig. 5). The valve opening 69 has a horizontal longitudinal axis 71 extending generally at right angles to the vertical axis of the housing. The valve opening 69 defined by the sleeve 65 has first and second opposite and open ends 75, 77, and the sleeve has a part-cylindrical internal surface 79 which defines a valve seat. An opening 81 in the valve seat communicates with the outlet 33 of the housing 7.

The lower outlet section 21 of the valve housing 7 comprises an upper generally cylindrical portion 91 and a lower funnel-shaped portion 93 for more precisely directing material into destination receptacles of various sizes, including relatively narrow receptacles. The lower segment 25b of the flow passage defined by the funnel-shaped portion 91 of the housing tapers toward the outlet 33 of the housing.

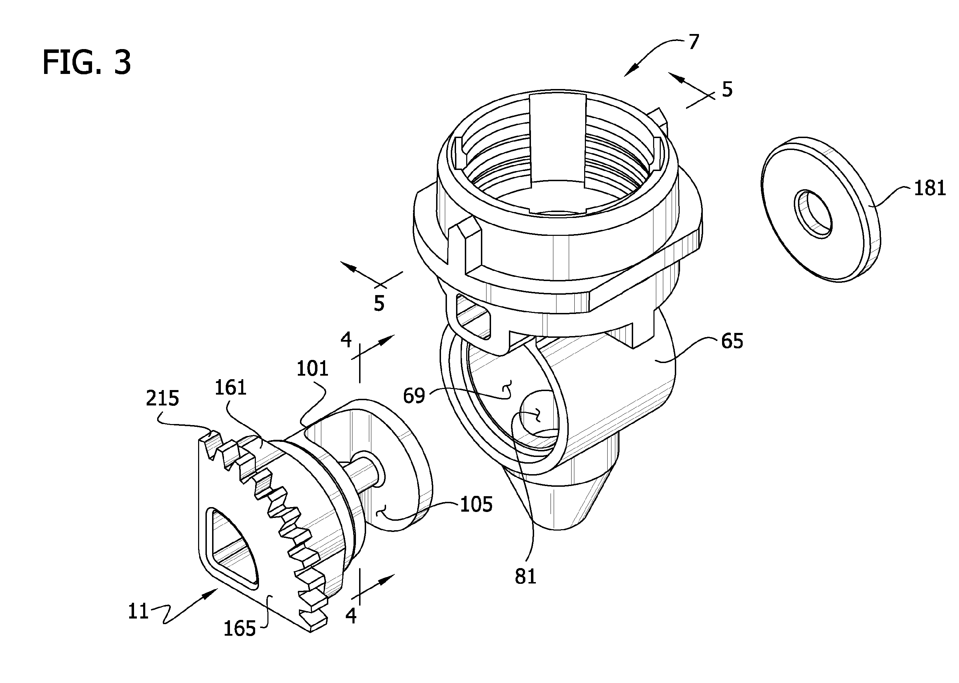

The valve member 11 is mounted in the valve opening 69 in the middle section 19 of the housing 7 for rotation about a horizontal axis which is generally co-axial with the longitudinal axis 71 of the sleeve 65 and generally transverse to the vertical flow passage 25 through the housing. Referring to Figs. 3, 10 and 11, the valve member 11 comprises a generally cylindrical valve body 101 and a slot 105 in the valve body having opposing sides 109, a closed bottom 111 and an open top 113. The valve body 101 has first and second end portions 117 with interior faces defining the opposing sides 109 of the slot and a bridging portion 125 having an interior face defining the bottom 111 of the slot. The slot 105 substantially reduces the amount of contact area with the valve seat 79, resulting in lower friction.

The end portions 117 of the valve body on opposite sides of the slot have curved generally cylindrical exterior faces 131 configured for sealing contact with corresponding curved generally cylindrical portions of the valve seat 79. As illustrated in the drawings, the end portions 117 are shaped like disks having curved exterior faces curving over arcs of 360 degrees. However, it will be understood that the end portions 117 could have exterior faces curved over less than 360 degrees. Desirably, the curved exterior faces should extend over at least 180 degrees to maintain the valve member 11 centered in the valve opening 69 as it is rotated. To prevent the loss (leakage) of particulate material, the curved exterior faces 131 of the end portions 117 have a close conforming contact fit with the valve seat 79. Desirably, any clearance between these exterior faces 131 and the valve seat 79 should is smaller than the size of the particles being handled.

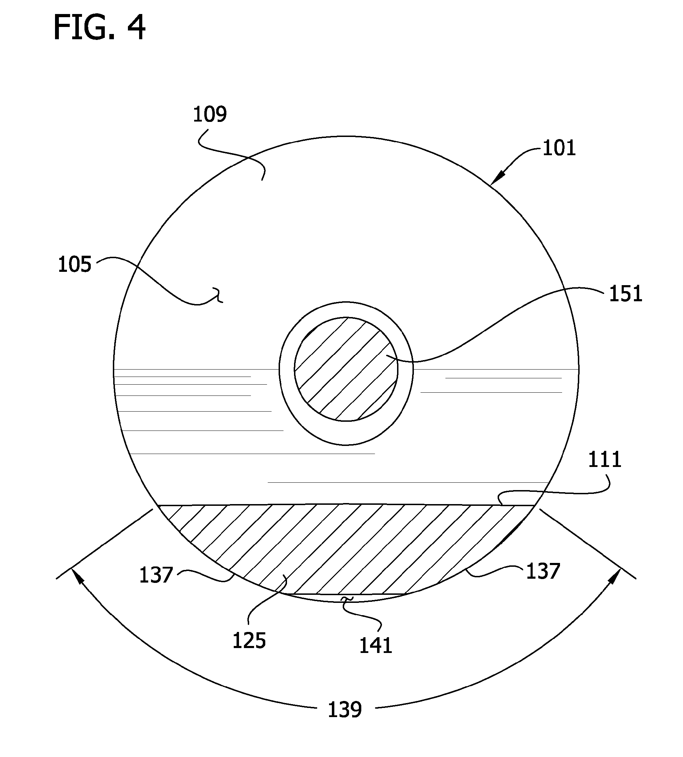

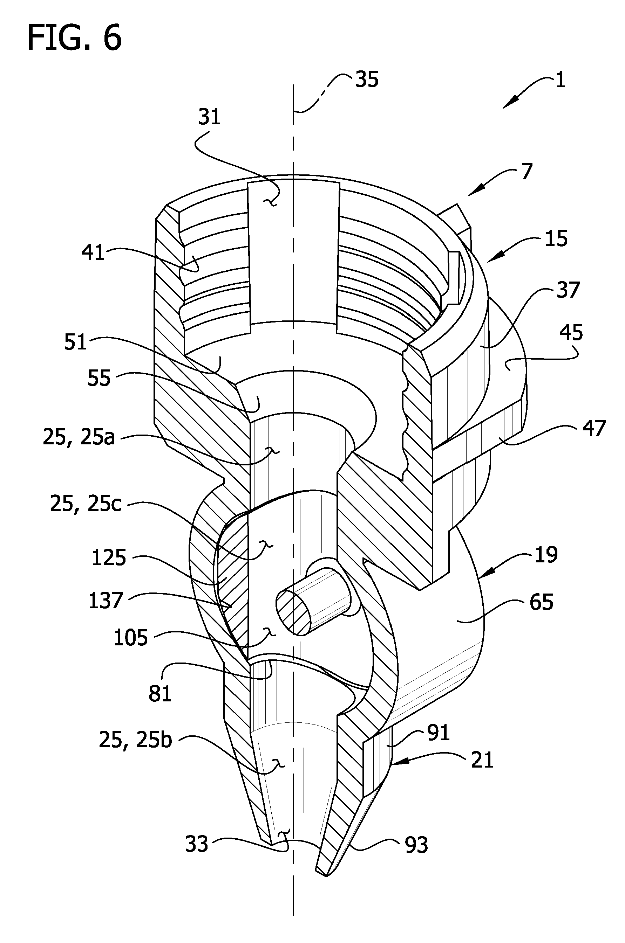

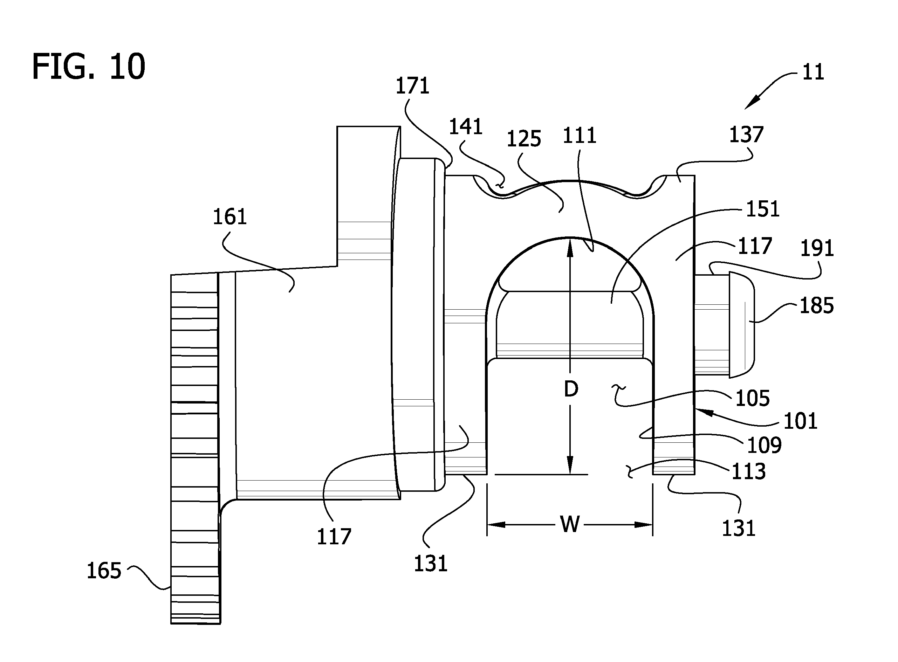

The bridging portion 125 of the valve body 101 has a curved exterior surface 137 configured for sealing contact with a corresponding surface of the valve seat 79 (see Figs. 4 and 6). The exterior surface 137 is desirably curved over an arc 139 in the range of about 45 to 135 degrees, and desirably at least about 90 degrees. To further reduce friction between the valve body 101 and the valve seat 79, the exterior surface 137 of the bridging portion is recessed to decrease the amount of surface area of the valve body in frictional contact with the valve seat. One such recess is indicated at 141 in Figs. 4 and 10. Any number of recesses may be used to minimize the amount of surface area in contact with the valve seat to reduce friction. The recess(es) should be surrounded by surface areas of the valve body 101 in sealing contact with the valve seat 79 to prevent powder from becoming captured in the recess(es).

The end portions 117 of the valve body 101 are connected by a generally horizontal brace 151 which spans the slot at a location above the bottom 111 of the slot 105 to stabilize (rigidify) the valve body. Desirably, the brace 151 is generally co-axial with the horizontal axis 71 of rotation of the valve body. The brace 151 has an exterior surface which is configured to shed powder. In Fig. 4, the exterior surface of the brace 151 has a cylindrical shape, but other shapes capable of deflecting material when the valve 11 is open are suitable.

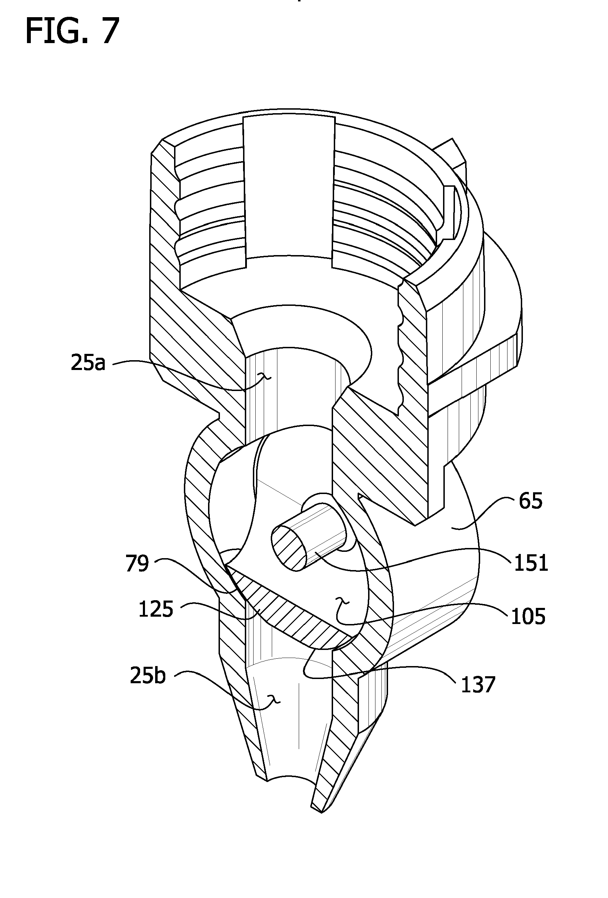

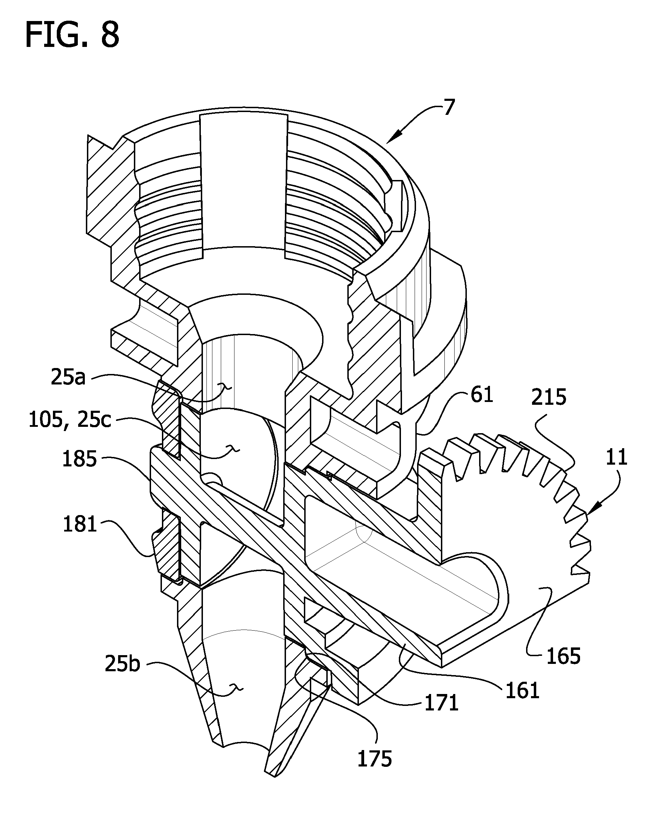

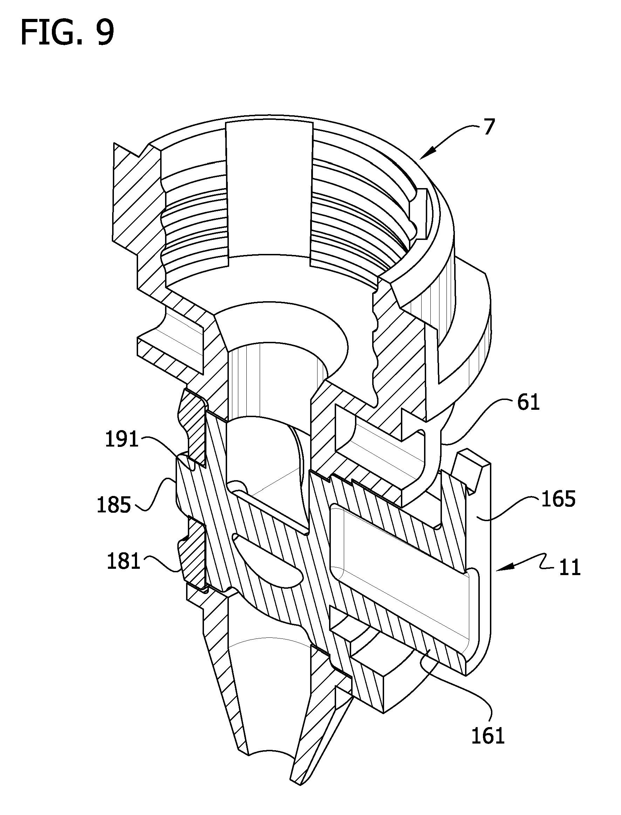

The valve body 101 and slot 105 are configured such that the slot communicates with both the inlet 31 and the outlet 33 of the valve when the valve member 11 is in its open position (Figs. 6 and 8), and such that the slot communicates with the inlet but not the outlet when the valve member is in its closed position (Figs. 7 and 9). In particular, the arrangement is such that when the valve member 11 is in its open position the bottom 111 and sides 109 of the slot 105 combine with the valve seat 79 closing the top of the slot to define an enclosed flow path corresponding to a middle segment 25c of the vertical flow passage 25 through the housing 7 for allowing flow of powder along the flow passage from the inlet 31 to the outlet 33 of the valve housing. On the other hand, when the valve member 11 is moved to its closed position, the valve seat opening 81 is closed by the bridging portion 125 of the valve body 101. Desirably, however, the slot 105 remains in communication with the inlet 31 and thus the contents of the source vessel 5. This is desirable for many reasons, one being that that the vessel 5 and valve 1 may be inverted to empty the entire contents of the valve back into the vessel prior to removal of the valve from the vessel. The material in the slot 105 is not lost because it is not isolated from the vessel when the valve is closed.

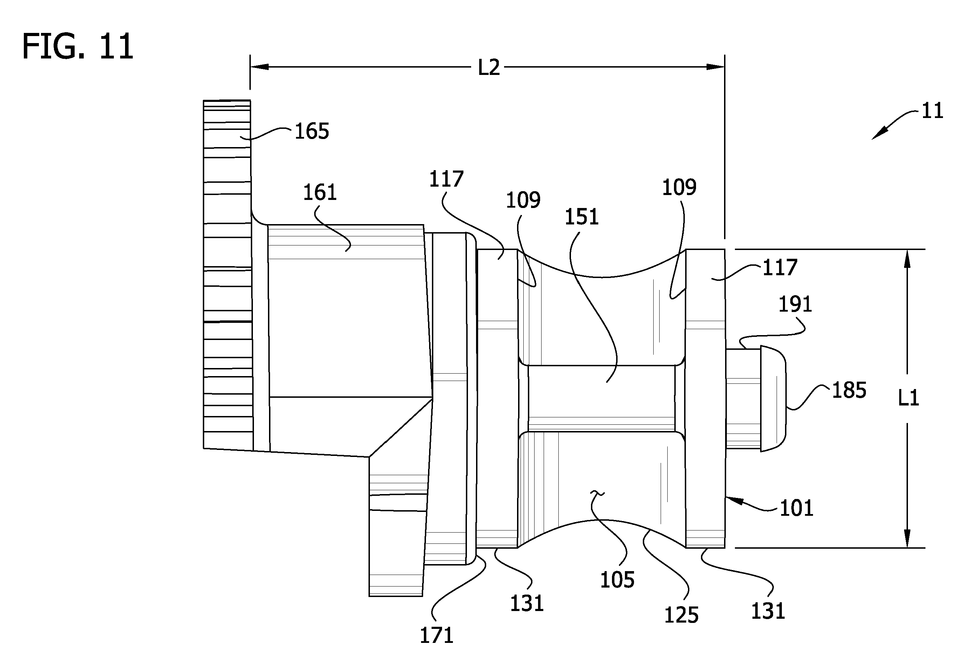

The slot 105 is dimensioned and configured to permit a free flow of material from the upper segment 25a of the flow passage 25 to the lower segment 25b of the flow passage. Referring to Figs. 10 and 11, the slot 105 has a length L1 from one end of the slot to the opposite end of the slot, a width W from one side wall 109 of the slot to the opposite side wall 109 of the slot, and a depth D from the top 113 of the slot to the bottom 111 of the slot. The depth D of the slot is such that the top and bottom of the slot are spaced from the axis of rotation 71 of the valve body on diametrically opposite sides of the axis of rotation. Desirably, the width W of the slot 105 is about the same as the diameter of the valve seat opening 81. The slot 105 shown in the drawings is generally U-shaped with generally parallel sides 109 and a concave bottom 111 to provide a smooth continuous uninterrupted surface free of sharp corners or other discontinuities which might otherwise interfere with the free flow of material through the slot. The slot may have other shapes.

As shown in Figs. 10 and 11, the valve member 11 further comprises a shaft 161 integrally connected to one end portion 117 of the valve body 101, and a drive mechanism 165 on the shaft for rotating the shaft to move the valve body 101 to positions corresponding to open and closed positions of the valve member 11. Desirably, the valve body 101, shaft 161 and drive mechanism 165 are integrally formed (e.g., injection molded) as a one-piece valve member. To reduce cost and weight, the shaft 161 is hollow.

Referring to Figs. 8-11, it will observed that the shaft 161 has a first inward-facing shoulder 171 at its inner end for contact with a corresponding outward-facing shoulder 175 on the valve housing 7. The contact of these shoulders 171, 175 with one another properly and accurately positions the valve member 11 with respect to the valve seat 79. The valve member is held in this position by a retainer 181 configured for releasable engagement with a projection 185 protruding from the end portion 117 of the valve body opposite the shaft 161 for securing the valve member 11 in the valve opening 69. In the illustrated embodiment, the retainer 181 comprises a resilient clip in the form of a snap ring which snaps into a groove 191 in the projection. The outside diameter of the ring 181 is greater than the valve opening 69 so that the ring contacts an exterior surface of the housing 7 to hold the valve member captive in the valve opening. The retainer 181 is releasable from the groove 191 to allow the valve member 11 to be readily removed from the valve opening 69 in the valve housing. Other mechanisms may be used for retaining the valve member in the valve housing.

Desirably, the generally cylindrical valve body 101 configured so that it may be pushed into the valve opening 69 through the first open end 75 of the valve opening. The fit of the valve body 101 in the opening 69 is tight to prevent leakage of material from the valve. The brace 151 spanning the slot 105 provides rigidity to the valve which enables it to be pushed into place without unwanted deformation or damage to the valve. The valve body 101 is pushed to a position in which the shoulders 171, 175 on the valve body and the valve housing 7 abut. The retaining clip 181 is then snapped into place on the projection 185 at the opposite (second) end 77 of the valve opening 69 to hold the valve member in proper position in the valve opening. As explained above, the clip 181 is releasable for allowing the valve member 11 to be quickly and easily removed from the valve housing 7 through the first open end 75 of the housing.

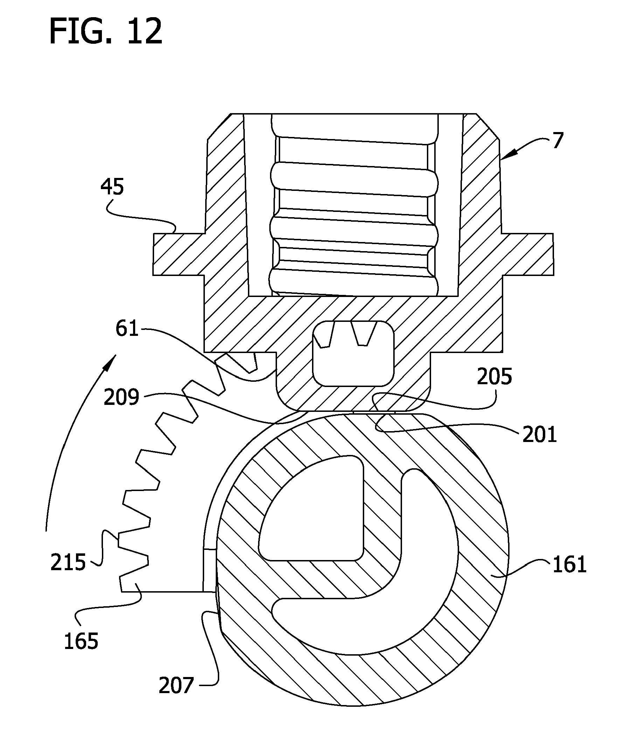

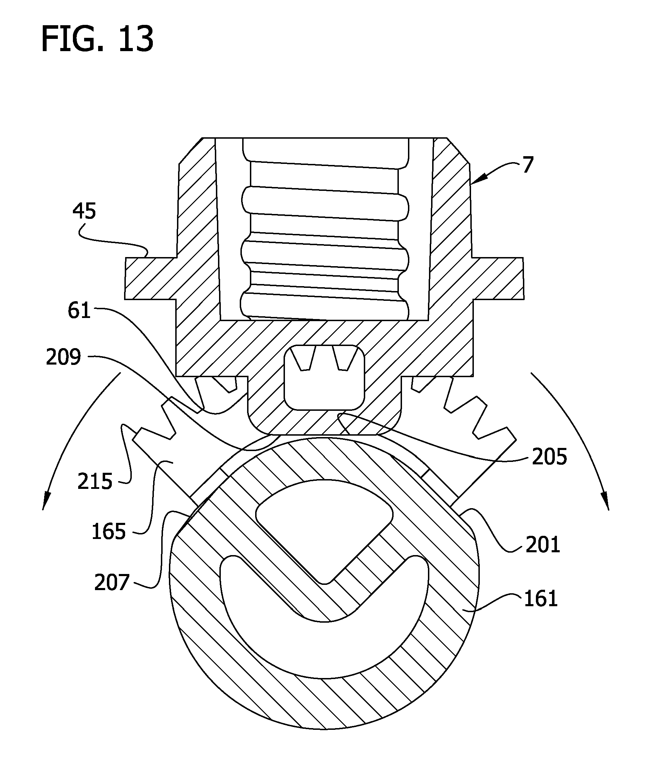

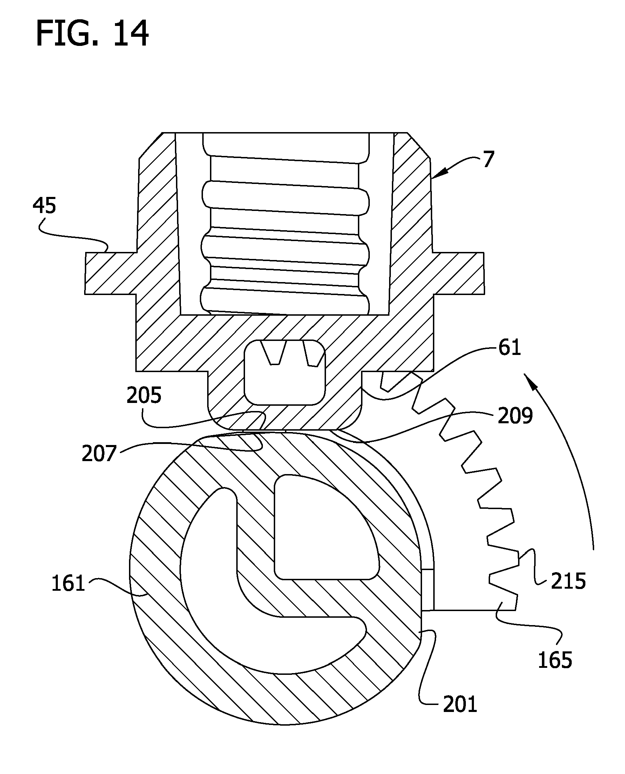

Stops are provided on the shaft 161 and on the valve housing 7 for stopping rotation of the shaft at positions corresponding to the open and closed positions of the valve member 11. In one embodiment (Figs. 12-14), these stops comprise a first flat 201 on the shaft 161 adapted for contact with a first flat 205 on the valve housing 7 to limit rotation of the shaft in a first direction to a position corresponding to the open position of the valve member (Fig. 12), and a second flat 207 on the shaft 161 adapted for contact with a second flat 209 on the valve housing 7 to limit rotation of the shaft in a second direction opposite the first direction to a position corresponding to the closed position of the valve member (Fig. 13). The flats 203, 207 on the shaft 161 are located on a curved surface of the shaft outboard of the inner shoulder 171 on the shaft. The flats 205, 209 on the valve housing 7 are located on a lower surface of the beam structure 61 on the valve housing. Other stops or mechanisms may be used to stop the rotation of the valve member 11 at its open and closed positions. In the embodiment shown, the rotation of the valve member is limited to about 90 degrees, but it will be understood that this number can vary depending on the configuration of the valve.

The drive mechanism 165 comprises a gear having teeth 215 for driving engagement with a suitable drive, e.g., a drive gear on the robot carrying the source vessel 5. In the embodiment shown in the drawings, the gear is a gear segment having a configuration corresponding to the desired range of rotation of the shaft and valve member (e.g., 90 degrees). The teeth 215 are configured to a very fine tolerance so that movement of the valve member can be closely controlled. In this regard, the valve member 11 is movable from a closed position in which the valve seat opening 81 is 100% closed (i.e., completely blocked) to an open position in which the valve seat opening is either partially open (i.e., less than 100% open) or fully open (i.e., 100% open) to allow flow of material through the vertical flow passage 25 in the valve. Desirably, the fine tolerance of the drive gear 165 permits the size of the opening available for flow to be precisely adjusted so that the rate of flow through the flow passage 25 can be closely controlled. If needed, vibration can also be applied to the source vessel 5 to initiate flow and/or to vary the flow rate. Further, the amplitude and/or frequency of any such vibration can be varied to achieve the desired results. In any event, fine tuning of the flow rate through the valve allows accurate amounts of material to be dispensed in an efficient manner. It is contemplated that drive mechanisms other than a gear can be used for rotating the valve member 11 between its open and closed positions.

The overall dimensions of the valve housing 7 and valve member 11 are relatively small in a typical application. In one embodiment, for example, the overall length L2 of the valve member 11 is desirably about 17.5mm (Fig. 10), the overall height of the valve housing 7 is about 29mm (Fig. 3), and the slot has length L1, width W and depth D of about 9mm, 5mm and 7mm, respectively (Figs. 9 and 10). These dimensions may vary. Further, it is contemplated that the size of the valve may be scaled up or down to suit virtually any application.

In the illustrated embodiment, the entire valve member 11, including the valve body 101, shaft 161 and drive mechanism 165 are integrally formed in one piece. Desirably, the configuration is such that the valve member can be injection molded as a single part. Similarly, the valve housing 7 is desirably formed as one piece, as by injection molding. As a result, the cost of making the valve can be reduced to a point where the valve is disposable after use.

In use, the valve 1 is assembled by pushing the valve member 11, valve body 101 first, into the valve opening 69 through the first open end 25 of the valve opening until the shoulder 171 on the valve member abuts the shoulder 175 on the housing 7. The retaining clip 181 is then snapped into place on the projection 185 of the valve member 11 at the opposite (second) end 77 of the valve opening 69. After the valve is assembled, the upper inlet end of the valve housing 7 is threaded onto the lower outlet end of a suitable source vessel 5 containing a particulate material to be dispensed. In many applications, including high-throughput applications, a robot is used to dispense material from the source vessel 5. The vessel is transported by the robot to the desired location. A suitable drive on the robot in driving engagement with the drive mechanism 165 on the valve member 11 is then operated to move the valve member from its closed position to an open position corresponding to the desired flow rate to be achieved. Material is dispensed from the vessel 5 and through the open flow passage 25 of the valve into a destination vessel which is typically supported by a weighing device. In one application, the weighing device provides real-time feedback to a controller programmed with suitable software to operate the robot according to a desired protocol. After a target weight of material has been dispensed into the receptacle, the controller operates the robot to close the valve. If desired, the vessel is moved to one or more different locations by the robot and the cycle is repeated at each location to deposit material into a destination vessel. After the desired number of deposits are made, the source vessel 5 and valve 1 may be removed from robot and inverted (turned upside down) to empty any material remaining in the valve (now in its closed position) into the vessel. The valve 1 can then be removed from the vessel 5 without any significant amount of material remaining in the valve. Alternatively, the valve can be left on the vessel to function as a cap or closure for the vessel while it is stored or otherwise used. Any material still remaining in the valve is subject to the same storage conditions as the material in the vessel, since the open top of the slot 105 in the valve member is in communication with the interior of the vessel.

It will be observed from the foregoing that a valve of this invention has one or more of the following advantages over prior valves used to dispense particulate solid materials such as powder or granules: the valve can be attached directly to a source vessel for dispensing directly from the vessel; the amount of material isolated from the source vessel when the valve is closed is minimized; the number of surfaces on the movable valve member in contact with the material flowing through valve is minimized to reduce the amount of material retained in the valve when the valve is closed; the material contained in the valve when the valve is closed can be emptied into the source vessel simply by inverting the vessel; the amount of contact area between the movable valve member and the valve seat is reduced, resulting in less friction; the valve member is easy to install in the housing and easy to remove from the valve housing 7 by using the releasable retainer 181; the tight fit of the valve body 101 in the valve opening 69 minimizes the amount of material lost during use of the valve; and the construction of the valve is such that the parts (valve housing 7, valve member 11 and retainer 181) are easy to make by an injection molding process for reduced cost.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above constructions and methods without departing from the scope of the invention as defined by the appended claims, it is intended that all matter contained in the above description and shown in the accompanying drawings shall be interpreted as illustrative and not in a limiting sense.

### It follows a list of further embodiments of the invention:

Embodiment 1: A valve for dispensing small quantities of solid material in powder or granular form, comprising a valve housing defining a generally vertical flow passage through the housing, said flow passage having an inlet and an outlet, a valve member comprising a valve body rotatable in the valve housing about a generally horizontal axis of rotation between an open position for permitting flow through down through the flow passage and a closed position blocking said flow, and a slot in the valve body, the valve body and slot being configured such that the slot communicates with both the inlet and the outlet when the valve member is in its open position, and such that the slot communicates with the inlet but not the outlet when the valve member is in its closed position, wherein said exterior surface of the bridging portion of the valve body is curved over an arc in the range of about 45-135 degrees.
Embodiment 2: A valve as set forth in embodiment 1, wherein said exterior surface of the bridging portion of the valve body is recessed for reducing frictional contact with the valve seat.
Embodiment 3: A valve as set forth in embodiment 1 further comprising stops on the shaft and the valve housing for stopping rotation of the shaft relative to the valve housing at positions corresponding to the open and closed positions of the valve member.
Embodiment 4: A valve for dispensing small quantities of solid material in powder or granular form, comprising a valve housing defining a generally vertical flow passage through the housing, said flow passage having an inlet and an outlet, a horizontal valve opening extending completely through the housing, said valve opening having opposite open ends, a valve member comprising a valve body rotatable in the valve opening about a generally horizontal axis of rotation between an open position for permitting flow through down through the flow passage and a closed position blocking said flow, a slot in the valve body, the valve body and slot being configured such that the slot communicates with both the inlet and the outlet when the valve member is in its open position, and such that the slot communicates with the inlet but not the outlet when the valve member is in its closed position, and a retainer adapted for securing the valve member in said valve housing, said retainer being releasable for allowing the valve member to be removed from the valve housing through an open end of the valve housing.

## Claims

1. A valve (1) for dispensing small quantities of solid material in powder or granular form, comprising
a valve housing (7) defining a generally vertical flow passage (25) through the housing, said flow passage (25) having an inlet (31) and an outlet (33) positioned on opposite sides of a valve seat (79),
a valve member (11) comprising a valve body (101) rotatable in the valve housing about a generally horizontal axis of rotation between an open position for permitting flow through down through the flow passage (25) and a closed position blocking said flow, and
a slot (105) in the valve body (101).
the valve body (101) and slot (105) being configured such that the slot (105) communicates with both the inlet (31) and the outlet (33) when the valve member (11) is in its open position, and such that the slot (105) communicates with the inlet(31) but not the outlet (33) when the valve member (11) is in its closed position
said valve body (101) comprising axially opposite end portions (117) defining opposite sides of the slot (105) and a bridging portion (125) connecting the end portions (117) and defining a bottom (111) of the slot (105), said bridging portion (125) of the valve body (101) having an exterior surface (137) forming a sealing fit with the valve seat (79) in the valve housing (7) and wherein said exterior surface (137) is not exposed to material flowing through the slot (105) when the valve body (101) is in its open position, **characterised in that** the exterior surface (137) of the bridging portion (125) has a recess (141) for reducing frictional contact with the valve seat (79).

2. A valve(1) as set forth in claim 1 wherein said slot (105) has a closed bottom and an open top spaced from the axis of rotation of the valve member on diametrically opposite sides of said axis.

3. A valve(1) as set forth in claim 1 wherein the opposite end portions of the valve body (101) have curved exterior faces having a sealing fit with a valve seat in the housing to inhibit loss of said material, each of said exterior faces being curved over an arc of at least about 180 degrees.

4. A valve (1) as set forth in claim 1 wherein said valve housing (7) has an inlet (31) end section configured for releasable connection to a source vessel containing material to be dispensed.

5. A valve (1) as set forth in claim 1 further comprising a horizontal brace extending between opposite sides of the slot (105) and spaced from a bottom of the slot (105).

6. A valve (1) as set forth in claim 1 wherein said valve member further comprises a shaft extending from one end of the valve body (101) and a gear on the shaft adapted for driving engagement with a drive to rotate the shaft and valve body (101) to positions corresponding to said open and closed positions.

7. A valve (1) as set forth in claim 6 wherein said valve body (101), shaft and gear are integrally formed as a one-piece injection-molded part.

8. A valve (1) as set forth in claim 1 further comprising a retainer adapted for securing the valve member (11) in said valve housing (7), said retainer being releasable for allowing the valve member (11) to be removed from the valve housing (7) through an open end of the valve housing (7).

9. A valve as set forth in claim 1 wherein
the valve housing includes a horizontal valve opening having opposite first and second ends extending completely through the valve housing,
the valve body has a generally cylindrical configuration so that it may be pushed into said valve opening through the first open end of the valve opening, and
the valve further comprises a retainer adapted to be positioned at the second open end of the valve opening for securing the valve member (11) in said valve housing (7), said retainer being releasable for allowing the valve member (11) to be removed from the valve housing (7) through the first open end of the valve housing(7).

10. A valve (1) as set forth in claim 9 wherein said retainer is adapted to be secured to said valve member and is configured for engagement with an exterior surface of said valve housing (7) at the second open end of the valve opening to retain the valve member (11) in the housing (7).

11. A valve as set forth in claim 10 wherein said retainer comprises a resilient clip adapted to be mounted on a projection protruding from one end of the valve body (101).

12. A valve as set forth in claim 9 wherein said valve member (11) further comprises a shaft extending from one end of the valve body (101) and a gear on the shaft adapted for driving engagement with a drive to rotate the shaft and valve body (101) to positions corresponding to said open and closed positions.

13. A valve(1) as set forth in claim 12 wherein said valve body(101), shaft and gear are integrally formed as a one-piece injection-molded part.

14. A valve (1) as set forth in claim 12 further comprising stops on the shaft and the valve housing (7) for stopping rotation of the shaft relative to the valve housing (7) at positions corresponding to the open and closed positions of the valve member (11).

15. A valve (1) as set forth in claim 9 wherein said valve housing(7) has an inlet (31) end section configured for releasable connection to a source vessel containing material to be dispensed.

## Patentansprüche

1. Ventil (1) zur Abgabe kleiner Mengen festen Materials in Pulver- oder Granulat-Form, umfassend:
ein Ventilgehäuse (7), das einen im Allgemeinen vertikalen Strömungsdurchgang (25) durch das Gehäuse definiert, wobei der Strömungsdurchgang (25) einen Einlass (31) und einen Auslass (33) aufweist, die an gegenüberliegenden Seiten eines Ventilsitzes (79) angeordnet sind,
ein Ventilelement (11) umfassend einen Ventilkörper (101), der in dem Ventilgehäuse um eine im Allgemeinen horizontale Rotationsachse zwischen einer geöffneten Stellung, zum ermöglichen einer Strömung nach unten durch den Strömungsdurchgang (25) und einer geschlossenen Stellung, zum blockieren der Strömung, drehbar ist und
eine Ausnehmung (105) in dem Ventilkörper (101),
der Ventilkörper (101) und die Ausnehmung (105) sind so ausgebildet, dass die Ausnehmung (105) mit dem Einlass (31) und dem Auslass (33) in Verbindung steht, wenn das Ventilelement (11) in seiner geöffneten Stellung ist, und so, dass die Ausnehmung (105) mit dem Einlass (31), aber nicht mit dem Auslass (33) in Verbindung steht, wenn das Ventilelement (11) in seiner geschlossenen Stellung ist,
der Ventilkörper (101) umfasst:
axial gegenüberliegende Endabschnitte (117), die gegenüberliegende Seiten der Ausnehmung (105) definieren, und einen Überbrückungsabschnitt (125), der die Endabschnitte verbindet und einen Boden (111) der Ausnehmung (105) definiert, wobei der Überbrückungsabschnitt (125) des Ventilkörpers (101) eine Außenfläche (137) aufweist, die eine abdichtende Passung mit dem Ventilsitz (79) in dem Ventilgehäuse (7) bildet
und wobei die Außenfläche (137) dem Material, das durch die Ausnehmung fließt, nicht ausgesetzt ist, wenn der Ventilkörper (101) in seiner geöffneten Stellung ist,
**dadurch gekennzeichnet, dass**
die Außenfläche (137) des Überbrückungsabschnittes (125) eine Vertiefung (141) zum Reduzieren des Reibungskontaktes mit dem Ventilsitz aufweist.

2. Ventil (1) nach Anspruch 1, **dadurch gekennzeichnet, dass** die Ausnehmung (105) einen geschlossenen Boden und eine offene Oberseite aufweist, die zu der Rotationsachse des Ventilelements an diametral gegenüberliegenden Seiten der Achse beabstandet sind.

3. Ventil (1) nach Anspruch 1, **dadurch gekennzeichnet, dass** die gegenüberliegenden Endabschnitte des Ventilkörpers (101) gekrümmte Außenflächen aufweisen, die eine abdichtende Passung mit dem Ventilsitz in dem Gehäuse aufweisen, um Verlust des Materials zu verhindern, wobei die Außenseiten über einen Bogen von wenigstens etwa 180 Grad gekrümmt sind.

4. Ventil (1) nach Anspruch 1, wobei das Ventilgehäuse (7) einen Einlassendabschnitt (31) aufweist, konfiguriert für eine lösbare Verbindung zu einem Quellbehälter, der abzugebendes Material beinhaltet.

5. Ventil (1) nach Anspruch 1, ferner umfassend eine horizontale Strebe, die sich zwischen den gegenüberliegenden Seiten der Ausnehmung (105) erstreckt und zu einem Boden der Ausnehmung (105) beabstandet ist.

6. Ventil (1) nach Anspruch 1, **dadurch gekennzeichnet, dass** das Ventilelement ferner eine Welle aufweist, die sich von einem Ende des Ventilkörpers (101) erstreckt und ein Ritzel auf der Welle, das zum Antreiben einer Kupplung mit einem Antrieb zum Rotieren der Welle sowie des Ventilkörpers zu Positionen entsprechend der offenen und geschlossenen Stellung geeignet ist.

7. Ventil (1) nach Anspruch 6, **dadurch gekennzeichnet, dass** der Ventilkörper (101), die Welle und das Ritzel im Wesentlichen als einteiliges Spritzgussteil ausgebildet sind.

8. Ventil (1) nach Anspruch 1, ferner umfassend eine Arretierung, geeignet das Ventilelement (11) im Ventilgehäuse (7) zu sichern, wobei die Arretierung lösbar ist, um das Ventilelement (11) von dem Ventilgehäuse (7) über ein offenes Ende des Ventilgehäuses (7) zu entfernen.

9. Ventil nach Anspruch 1, wobei
das Ventilgehäuse eine horizontale Ventilöffnung umfasst, die ein gegenüberliegendes erstes und zweites Ende aufweist, die sich vollständig durch das Ventilgehäuse erstrecken,
der Ventilkörper eine im Allgemeinen zylindrische Gestaltung aufweist, so dass er durch das erste offene Ende in der Ventilöffnung in die Ventilöffnung gedrückt werden kann,
und
das Ventil ferner eine Arretierung umfasst, die geeignet ist an dem zweiten offenen Ende der Ventilöffnung zum Sichern des Ventilelementes (11) im Ventilgehäuse (7) positioniert zu werden, wobei die Arretierung lösbar ist, um das Ventilelement (11) von dem Ventilgehäuse (7) durch das erste offenen Ende des Ventilgehäuses (7) zu entfernen.

10. Ventil nach Anspruch 9, wobei die Arretierung geeignet ist, das Ventilelement zu sichern und konfiguriert ist zur Kupplung mit einer Außenfläche des Ventilgehäuses (7) an dem zweiten offenen Ende der Ventilöffnung, um das Ventilelement (11) im Gehäuse (7) zu halten.

11. Ventil nach Anspruch 10, wobei die Arretierung eine elastische Sicherung umfasst, die geeignet ist an einem von einem Ende des Ventilkörpers vorstehenden Vorsprung befestig zu werden.

12. Ventil nach Anspruch 9, wobei das Ventilelement (11) ferner eine Welle umfasst, die sich von einem Ende des Ventilkörper (101) erstreckt, und ein Ritzel an der Welle, die zum Antreiben einer Kupplung mit einem Antrieb zum Drehen der Welle sowie des Ventilkörpers (101) zu Positionen entsprechend der offenen und geschlossenen Stellung geeignet ist.

13. Ventil (1) nach Anspruch 12, wobei der Ventilkörper (101), die Welle und das Ritzel im Wesentlichen als einteiliges Spritzgussteil ausgebildet sind.

14. Ventil (1) nach Anspruch 12, ferner umfassend Anschläge an der Welle und dem Ventilgehäuse (7), zum Anhalten der Drehung der Welle relativ zum Ventilgehäuse (7) an Positionen entsprechend der offenen und geschlossenen Stellung des Ventilelementes (11).

15. Ventil (1) nach Anspruch 9, wobei das Ventilgehäuse (7) ein Einlassendabschnitt (31) aufweist, konfiguriert für eine lösbare Verbindung zum Quellbehälter, der abzugebendes Material beinhaltet.

## Revendications

1. Soupape (1) de distribution de petites quantités de matière solide sous forme de poudre ou de granules, comprenant
un logement de soupape (7) définissant un passage d'écoulement (25) généralement vertical à travers le logement, ledit passage d'écoulement (25) ayant une admission (31) et un refoulement (33) positionnés sur des côtés opposés d'un siège de soupape (79),
un organe de soupape (11) comprenant un corps de soupape (101) rotatif dans le logement de soupape autour d'un axe de rotation généralement horizontal entre une position ouverte pour permettre un écoulement vers le bas à travers le passage d'écoulement (25) et une position fermée bloquant ledit écoulement, et
une fente (105) dans le corps de soupape (101),
le corps de soupape (101) et la fente (105) étant configurés de sorte que la fente (105) communique à la fois avec l'admission (31) et le refoulement (33) lorsque l'organe de soupape (11) est dans sa position ouverte, et de sorte que la fente (105) communique avec l'admission (31) mais pas avec le refoulement (33) lorsque l'organe de soupape (11) est dans sa position fermée,
ledit corps de soupape (101) comprenant des portions d'extrémité (117) axialement opposées définissant des côtés opposés de la fente (105) et une portion de pontage (125) raccordant les portions d'extrémité (117) et définissant un fond (111) de la fente (105), ladite portion de pontage (125) du corps de soupape (101) ayant une surface extérieure (137) formant un ajustement d'étanchéité avec le siège de soupape (79) dans le logement de soupape (7), et dans laquelle ladite surface extérieure (137) n'est pas exposée à la matière s'écoulant à travers la fente (105) lorsque le corps de soupape (101) est dans sa position ouverte, **caractérisée en ce que** la surface extérieure (137) de la portion de pontage (125) comporte un évidement (141) pour réduire un contact de frottement avec le siège de soupape (79).

2. Soupape (1) selon la revendication 1, dans laquelle ladite fente (105) comporte un fond fermé et un dessus ouvert espacés de l'axe de rotation de l'organe de soupape sur des côtés diamétralement opposés dudit axe.

3. Soupape (1) selon la revendication 1, dans laquelle les portions d'extrémité opposées du corps de soupape (101) ont des faces extérieures incurvées ayant un ajustement d'étanchéité avec un siège de soupape dans le logement pour limiter une perte de ladite matière, chacune desdites faces extérieures étant incurvée sur un arc d'au moins environ 180 degrés.

4. Soupape (1) selon la revendication 1, dans laquelle ledit logement de soupape (7) comporte une section d'extrémité d'admission (31) configurée pour un raccordement libérable à une cuve source contenant une matière à distribuer.

5. Soupape (1) selon la revendication 1, comprenant en outre une entretoise horizontale s'étendant entre des côtés opposés de la fente (105) et espacée d'un fond de la fente (105).

6. Soupape (1) selon la revendication 1, dans laquelle ledit organe de soupape comprend en outre un arbre s'étendant depuis une extrémité du corps de soupape (101) et un pignon sur l'arbre adapté pour une prise d'entraînement avec un élément d'entraînement pour amener en rotation l'arbre et le corps de soupape (101) au niveau des positions correspondant auxdites positions ouverte et fermée.

7. Soupape (1) selon la revendication 6, dans laquelle lesdits corps de soupape (101), arbre et pignon sont formés solidairement en forme d'une pièce monobloc moulée par injection.

8. Soupape (1) selon la revendication 1, comprenant en outre un dispositif de retenue adapté pour fixer l'organe de soupape (11) dans ledit logement de soupape (7), ledit dispositif de retenue étant libérable pour permettre de retirer l'organe de soupape (11) du logement de soupape (7) à travers une extrémité ouverte du logement de soupape (7).

9. Soupape selon la revendication 1, dans laquelle
le logement de soupape comprend une ouverture de soupape horizontale ayant des première et seconde extrémités opposées s'étendant totalement à travers le logement de soupape,
le corps de soupape a une configuration généralement cylindrique de façon à pouvoir être poussé dans ladite ouverture de soupape à travers la première extrémité ouverte de l'ouverture de soupape, et
la soupape comprend en outre un dispositif de retenue adapté pour être positionné au niveau de la seconde extrémité ouverte de l'ouverture de soupape pour fixer l'organe de soupape (11) dans ledit logement de soupape (7), ledit dispositif de retenue étant libérable pour permettre de retirer l'organe de soupape (11) du logement de soupape (7) à travers la première extrémité ouverte du logement de soupape (7).

10. Soupape (1) selon la revendication 9, dans laquelle ledit dispositif de retenue est adapté pour être fixé audit organe de soupape et est configuré pour une mise en prise avec une surface extérieure dudit logement de soupape (7) au niveau de la seconde extrémité ouverte de l'ouverture de soupape pour retenir l'organe de soupape (11) dans le logement (7).

11. Soupape selon la revendication 10, dans laquelle ledit dispositif de retenue comprend une pince élastique adaptée pour être montée sur une protubérance dépassant d'une extrémité du corps de soupape (101).

12. Soupape (1) selon la revendication 9, dans laquelle ledit organe de soupape (11) comprend en outre un arbre s'étendant depuis une extrémité du corps de soupape (101) et un pignon sur l'arbre adapté pour une prise d'entraînement avec un élément d'entraînement pour amener en rotation l'arbre et le corps de soupape (101) au niveau des positions correspondant auxdites positions ouverte et fermée.

13. Soupape (1) selon la revendication 12, dans laquelle lesdits corps de soupape (101), arbre et pignon sont formés solidairement en une pièce monobloc moulée par injection.

14. Soupape (1) selon la revendication 12, comprenant en outre des butées sur l'arbre et le logement de soupape (7) pour arrêter la rotation de l'arbre par rapport au logement de soupape (7) au niveau des positions correspondant aux positions ouverte et fermée de l'organe de soupape (11).

15. Soupape (1) selon la revendication 9, dans laquelle ledit logement de soupape (7) comporte une section d'extrémité d'admission (31) configurée pour un raccordement libérable à une cuve source contenant une matière à distribuer.
